(19) Europäisches Patentamt
European Patent Office
Office européen des brevets

(11) EP 0 831 305 B1

(12) **EUROPEAN PATENT SPECIFICATION**

(45) Date of publication and mention of the grant of the patent:
**15.08.2007 Bulletin 2007/33**

(51) Int Cl.:
***G01F 1/684*** *(2006.01)* ***G01F 1/69*** *(2006.01)*

(21) Application number: **97116362.1**

(22) Date of filing: **19.09.1997**

(54) **Thermal type flow meter**

Thermischer Strömungsmengenmesser

Débitmètre thermique

(84) Designated Contracting States:
**DE GB**

(30) Priority: **20.09.1996 JP 24973696**

(43) Date of publication of application:
**25.03.1998 Bulletin 1998/13**

(73) Proprietors:
- **Hitachi, Ltd.**
  **Tokyo 100-8280 (JP)**
- **Hitachi Car Engineering Co., Ltd.**
  **Hitachinaka-shi,**
  **Ibaraki-ken 312 (JP)**

(72) Inventors:
- **Arai, Nobukatsu**
  **Ushiku-shi,**
  **Ibaraki 300-12 (JP)**
- **Kowatari, Takehiko**
  **Kashiwa-shi,**
  **Chiba 277 (JP)**
- **Uchiyama, Kaoru**
  **Naka-gun,**
  **Ibaraki 319-22 (JP)**
- **Izumi, Watanabe**
  **Hitachinaka-shi,**
  **Ibaraki 312 (JP)**
- **Igarashi, Shinya**
  **Naka-gun,**
  **Ibaraki 311-01 (JP)**

(74) Representative: **Beetz & Partner**
**Steinsdorfstrasse 10**
**80538 München (DE)**

(56) References cited:
**EP-A- 0 536 880** **DE-A- 3 103 178**
**US-A- 5 224 378**

- **PATENT ABSTRACTS OF JAPAN vol. 095, no. 011, 26 December 1995 & JP 07 229777 A (HITACHI LTD;OTHERS: 01), 29 August 1995,**
- **PATENT ABSTRACTS OF JAPAN vol. 018, no. 672 (E-1646), 19 December 1994 & JP 06 267711 A (NGK INSULATORS LTD), 22 September 1994,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 831 305 B1

## Description

BACKGROUND OF THE INVENTION

The present invention relates to a thermal type flow meter, particularly to a thermal type flow meter suitable to detect an quantity of intake air into an engine for automobiles and a measurement element for the flow meter.

In an engine for automobiles, it is required to operate with stability at temperatures within extremely wide range. Generally, the range of temperatures is from - 30 °C to + 80 °C. Accordingly, also in the thermal type flow meter for an engine, it is essential to be able to measure with accuracy within the above-mentioned range of temperatures.

However, as is well-known, the physical value of air varies according to air temperatures. Therefore, in the constant temperature type hot wire wind gauge, an error occurs according to variation of the temperature of the intake air. Because in such a flow meter a flow quantity or an output can be converted into a value proportional to the measured flow velocity, the flow velocity or the wind speed can be obtained as a flow quantity or a wind quantity.

The variation of air physical properties corresponding to that of temperatures within the above-mentioned temperature range is shown in Figs.10 and 11. Fig.10 is a numerical value graph showing the variation of the air physical properties corresponding to that of the temperatures. Fig.11 is a numerical value graph showing the variation of flow velocity, non-dimensional number and thermal conductivity corresponding to the variation of air physical properties which correspond to the variation of temperatures. For example, if the physical properties at 25 °C (a final letter is 0) which is a center value of the above temperature range is set to as a standard, the density a of air, the coefficient ν a of kinematic viscosity, the heat conductivity λ a and the Prandtl number Pr vary as shown in Fig.10. As a result, the flow velocity ua, the Reynolds number Re, the average Nusselt's number Num and the average heat-transfer coefficient α m vary as shown in Fig.11. The average heat-transfer coefficient α m which has an effect finally, becomes larger as the air temperature increases, and it becomes smaller as the air temperature decreases. Basically, the variation of the average heat-transfer coefficient causes the variation of an quantity of heat radintake air temperatureion from the heating resistor and the support member for it, namely, the variation of the total heating quantity of the thermal type flow meter. This causes an error of the thermal type flow meter due to the variation of the temperature of an intake air. In general, this error is compensated by providing the approximately constant heating extent (over-temperature Δ Te against the intake air temperature) by using a bridge circuit or an electronic circuit having the function equivalent with the bridge circuit connected to the flow meter so that the temperature The of the heating resistor or the electrical resistance Rh may vary according to the intake air temperature.

Japanese Patent Laid-Open No. 55-50121 (1980) discloses the technique in which the temperature of a heating resistor is varied according to the intake air temperature detected in order to solve the above-mentioned problem. Namely, it states that by detecting the intake air temperature by a temperature compensating resistor, and providing the approximately constant heating or over-temperature Δ Te to the heating resistor for detecting the flow velocity by using the bridge circuit, this error can be eliminated.

Further, Japanese Patent Laid-Open No.5-312612 (1993) points out that the Japanese Patent Laid-Open No. 55-50121 does not consider the compensation of the loss of heat radintake air temperatureion and that of the heat-transfer to the support portion of the heating element. In order to compensate mainly the loss of heat radintake air temperatureion, the equipment disclosed in Japanese Patent Laid-Open No. 5-312612 is so constructed that a second measurement element in addition to a first measurement element is arranged in a fluid passage, and the second measurement element may be heated more than the temperature of the first measurement element in a low flow velocity range when the temperature of the fluid is high.

Further, Japanese Patent Laid-Open No.4-285818 (1992) discloses the technique in which the flow quantity in a wide range can be accurately detected by setting the value of a temperature coefficient of the electrical resistance of a temperature compensating resistor Rc to a value lower than that of a temperature coefficient of the electrical resistance of a heating resistor Rh.

While, Japanese Patent Laid-Open No.5-52626 (1993) discloses the technique in which the high responsibility and the high adhesive strength of lead wire can be obtained by joining lead wires having the core wire consisting of the material having the head conductivity lower than that of the platinum coated with an alloy layer of which main component is platinum, for example, 40Ni-Fe alloy or SUS 430, to the heating resistor of which the body is formed by a bobbin type ceramics.

While in the prior art disclosed in Japanese Patent Laid-Open No.55-50121 the component of the variation of the heat transfer quantity due to compulsive convection current is compensated with respect to temperature, it is not considered that the variation of the characteristics of the heat transfer of the flow meter including the heating resistor and its lead must be compensated. Even if the adjustment for eliminating the error for example, at a intermedintake air temperaturee and arbitrary flow velocity or flow quantity, is performed, an error becomes large in a measurement range apart from the adjusted values (due to the fluctuation of the characteristics of the heat transfer of the heating resistor in accordance with the flow velocity or the flow quantity). This is concretely shown in Fig.9. Fig.9 is a numerical value graph showing the variation of an error of an output of the flow conversion according to the variation of the flow velocity at different intake air temperatures in the conventional thermal type flow meter. As designated at a solid wire representing the result of measurement in Fig.9, when the intake air temperature varies from 25 °C to 80 °C, there is a problem that a plus error occurs at a low flow side and a minus error occurs at a high flow side.

Further, the Japanese Patent Laid-Open No.5-312612 which can solve the problem of the Japanese Patent Laid-Open No.55-50121 has the following problem. Namely, it becomes complicated in hardware. According to the inventors' study, the main cause of the variation of the error due to the flow velocity or the flow quantity is not based on the variation of loss of the heat radintake air temperatureion, but the variation of loss of the heat transfer to the support member for the heating element shown in the Japanese Patent Laid-Open No. 5-312612.

It is, therefore, impossible sufficiently to compensate the output error against the variation of the flow velocity due to the variation of the heat transfer to the support member for the heating element by using the above-mentioned construction. The reason will be explained hereinafter. Fig.8 shows a temperature compensating circuit in the conventional thermal type flow meter. For example, in the conventional thermal type flow meter to compensate the temperature of the heating resistor by using a bridge circuit as shown in Fig.8, the variation of the temperature The of the heating resistor, the temperature Thl of the lead and the temperature Tht of the terminal at a standard intake air temperature 25 °C and an intake air temperature 80 °C is shown in Fig.12. Further, the variation of the ratio of the total heating quantity Qt (80) at an intake air temperature 80 °C , the radintake air temperatureion quantity Qa (80) to the air in an element body and the heat transfer quantity Ql (80) to the lead to the total heating quantity of the flow meter at a standard intake air temperature 25 °C, occurred by the variation of the flow velocity is shown in Fig.13. As shown in Fig.12, while the temperature The of the heating resistor is approximately constant at 25 °C and 80 °C with respect to the flow velocity, the temperature Thl of the lead and the temperature Tht of the terminal becomes high as the flow velocity becomes low. Further, it is seen from Fig.13 that Qa(80)/Qt(25) increases as the flow velocity increases, but Ql(80)/Qt(25) decreases as the flow velocity increases. The sum Qt(80)/Qt(25) is relatively large at a side of the low flow velocity. This small inclination finally causes the plus error at a low flow and the minus error at a high flow. This is because the inclination of the variation Ql(80)/Qt(25) of the heat transfer to the lead wire is larger by a little than the inclination of the variation Qa(80)/Qt(25) of the radintake air temperatureion quantity from the element body.

The fact is clearly seen from Fig.14. Fig.14 is a numerical value graph showing the variation of difference between the ratio of the heating quantity at different intake air temperatures and the variation of the temperature of the heating element in the conventional thermal type flow meter.

In Fig.14, the variation of the difference δ δ between the ratio Ql(80)/Qt(25) of the heat transfer quantity Ql(80) to the lead at an intake air temperature 80 °C and the total heating quantity Qt(25) at an intake air temperature 25 °C at a flow velocity 50 m/s, and the ratio Ql(80)/Qt(25) at a low velocity, caused by the variation of the flow velocity, is shown. The solid wire designates an example in the conventional thermal type flow meter, in which the value δ δ at the flow velocity 0.5 m/s is larger than 50 % of the value at the flow velocity 50 m/s.

The operation of the apparatus disclosed in the Japanese Patent Laid-Open No.4-28581 is basically the same as that of the Japanese Patent Laid-Open No.55-50121. Therefore, there is the problem that the variation of the inclination of the error occurred by the variation of the flow velocity under different conditions of temperature is not eliminated, even if the temperature compensation is performed at a certain flow. In this reference, as means for varying the coefficient of temperature of the electrical resistance by using the temperature compensating resistor and the heating resistor, means for changing the thickness of a metal film or the condition of heat treatment. However, such a means is not actual in taking the variations of production into consideration. Further, in the technique disclosed in the Japanese Patent Laid-Open No. 5-52626, the heat transfer from the heating resistor to the lead member is decreased by lowering the thermal conductivity to the lead member. Namely, the improvement of the variation of the thermal conductivity at the lead which causes the variation of the measurement error variation due to the variation of the flow velocity in the flow meter is not considered.

JP 07-229777 relates to a resistor element being composed by a lead wire with an alloy including precious metals which have a low heat conductivity and a corrosion resistance. The heating resistor element and the heat sensitive resistor element are composed by forming a resistor made by fixing a lead wire to a cylindrical ceramic base body through an adhesive.

JP 06-267711 relates to a resistor element by composing leads of noble metal of one end of the lead wire and a low heat conductive part connected to the metal and disposed at the other end of the lead, wherein the metal is fixed to an electric insulator.

Recently, the request to suppress the direct or indirect effect of the harmful components included in an exhaust gas from an automobile on the environment is increasing. In the United State, the policy that the maximum reference value of the emission amount of Nox out of the harmful components CO, HC and NOx included in the exhaust gas emitted from an engine for an automobile must be decreased to one second at the beginning, and then to one third will be performed by 2000. Similarly, taking the future of the petroleum source into consideration, the policy that the maximum reference value of percentage of the fuel consumption must be decreased to one second after 2000 will be performed.

The above-mentioned harmful components and the fuel consumption is extremely affected by the air/fuel ratio which is the mixture of the air and the fuel burned in the automobile engine. Accordingly, it is necessary to manage accurately more than ever the air/fuel ratio, and thus to improve the accuracy of the flow measurement which directly determines the adjustment of the air/fuel ratio. Particularly in the catalyst to decrease the above-mentioned harmful components, the air/fuel ratio is controlled in the neighborhood of the value 1, because the invert ratio sharply varies from approximately 100 % after and before the value of the air/fuel ratio. Therefore, in order to satisfy the above-mentioned reference, it is necessary to decrease the measurement error to one second or one third smaller than ever.

SUMMARY OF THE INVENTION

An object of the present invention is to provide a thermal type flow meter realized at a low cost in which the output error due to the variation of the flow quantity or flow velocity and the intake air temperature.

Another object of the present invention is to provide a thermal type flow meter which can provide the control of an engine to an advantageous output characteristics in order to improve the fuel consumption of the engine at high temperatures and the start characteristic of the engine at low temperatures and to decrease the harmful components included in an exhaust gas.

The above-mentioned problems have been solved by a thermal type flow meter according to claim 1.

BRIEF DESCRIPTION OF THE DRAWINGS

Fig.1 is a sectional view showing the whole configuration of an embodiment of a thermal type flow meter according to the present invention.

Fig.2 is a front view showing the whole configuration of the embodiment of the thermal type flow meter according to the present invention.

Fig.3 is a vertical cross section showing the main portion of the embodiment of the thermal type flow meter according to the present invention.

Fig.4 is a numerical value graph showing the comparison of characteristics of the flow velocity and the output in the thermal type flow meter of the present invention and the prior art.

Fig.5 is a numerical value graph showing the comparison of characteristics of the intake air temperature and the extent of heating in the thermal type flow meter of Fig. 1 and the prior art.

Fig.6 is a numerical value graph showing the comparison of characteristics of the intake air temperature and the output in the thermal type flow meter of Fig.1 and the prior art.

Fig.7 shows the concept of the temperature compensation in the thermal type flow meter according to the present invention and in the prior art.

Fig.8 shows a temperature compensating circuit in the conventional thermal type flow meter.

Fig.9 is a numerical value graph showing the variation of an error of an output of the flow conversion according to the variation of the flow velocity at different intake air temperatures in the conventional thermal type flow meter.

Fig.10 is a numerical value graph showing the variation of the air physical properties corresponding to that of the temperatures.

Fig.11 is a numerical value graph showing the variation of flow velocity, non-dimensional number and thermal conductivity corresponding to the variation of air physical properties which correspond to the variation of temperatures.

Fig.12 shows the variation of the temperature The of the heating resistor, the temperature of the lead and the temperature of the terminal at a standard intake air temperature 25 °C and an intake air temperature 80 °C .

Fig.13 shows the variation of the ratio of the total heating quantity at an intake air temperature 80 °C, the radintake air temperatureion quantity to the air in an element body and the heat transfer quantity to the lead to the total heating quantity of the flow meter at a standard intake air temperature 25 °C, occurred by the variation of the flow velocity.

Fig.14 is a numerical value graph showing the variation of difference between the ratio of the heating quantity at different intake air temperatures and the variation of the temperature of the heating element in the conventional thermal type flow meter.

Fig.15 is a numerical value graph showing the variation of the ratio of the heating quantity and the variation of the flow velocity at different intake air temperature in the thermal type flow meter according to the present invention.

Fig.16 is a vertical cross section showing in detail an example of the configuration of the heating resistor 1 used in the thermal type flow meter shown in Fig.1

Fig.17 is a sectional view of a lead wire of the measurement element in the thermal type flow meter according to the present invention.

Fig.18 is a table showing the thermal conductivity and the coefficient of temperature of a lead wire or a terminal and antioxidant film used in the thermal type flow meter according to the present invention and the prior art.

PREFERRED EMBODIMENTS OF THE PRESENT INVENTION

The forms in which the present invention is realized will be explained hereinafter with reference to Figs.1 to 8, Figs.14 to17 and Table 1.

Figs.1 and 2 show the whole configuration of an embodiment of a thermal type flow meter according to the present invention.

Reference numeral 10 designates a body on which a thermal type flow meter according to the present invention is mounted, and which forms a portion of an intake air passage. Reference numeral 12 designates a main flow passage provided inside the body 10, through which the air flow passes, and 11 a member provided inside the main flow passage 12, for supporting a heating resistor 1 and a temperature compensating resistor 5 inside. Reference numeral 13 designates a sub-flow passage provided inside the member 11, and the air flow passing through the sub-flow passage 13 is measured by the heating resistor 1 and the temperature compensating resistor 5. The heating resistor 1 and the temperature compensating resistor 5 are fixed on a plastic mold 4 provided in a passage parallel with a main flow in the sub-flow passage 13 via a terminal 3a and a lead wire 2a. Reference numeral 21 designates an air flow branched to the sub-flow passage 13 and 22 an outlet flow from the sub-flow passage.

Fig.3 is a vertical cross section showing the main portion of the embodiment of the thermal type flow meter according to the present invention. Arrows of Fig.3 designate flow direction of heat.

The heating resistor 1 is supported in the fluid by the lead wires 2a, 2b and terminals 3a, 3b connected to the lead wires. The terminal 3a, 3b are connected to the plastic mold 4 including an electrical conductor to a circuit module (not shown). The above-mentioned components forms a main portion of the thermal type flow meter.

The configuration of the heating resistor 1 will be explained with reference to Fig.16. Fig.16 is a vertical cross section showing in detail an example of the configuration of the heating resistor 1 used in the thermal type flow meter shown in Fig.1.

As shown in the figure, a platinum wire with small radius is wound around the outer surface of a bobbin-shaped basic body 101 formed by using aluminum, etc.. Both ends of the platinum wire are welded to the metal leads 2a, 2b inserted into holes formed in the basic body 101. The leads 2a, 2b are inserted into and fixed in the holes of the basic body 101 by adhesive 30 such as glass adhesive. The lead is formed by using titanium, tantalum, stainless alloy, or alloy including the component of platinum or palladium, of which the amount of the variation of the thermal conductivity due to the temperature is small as compared with platinum iridium which has been used so far. Further, the whole body is over-coated with glass 31.

Fig.7 shows the concept of the temperature compensation in the thermal type flow meter according to the present invention and in the prior art. In Fig.7, reference numeral 5 designates a temperature compensating resistor for measuring the intake air temperature. Reference numeral 6a designates a lead wire for the temperature compensating resistor, and 7a a terminal for the temperature compensating resistor. Reference numeral 8 designates an electronic circuit connected to the heating resistor 1 and the temperature compensating resistor 5, for determining a current to compensate the measurement error of the flow velocity measured by using the heating resistor 1 along with those resistors. The temperature The of the heating resistor is controlled by adding the predetermined heat temperature $\Delta$ Te to the temperature Tce detected by the temperature compensating resistor, by the electronic circuit 8. While the electronic circuit 8 is actually more complicated, it is basically constructed from a bridge circuit including the heating resistor 1 and the temperature compensating resistor 5 as shown in Fig.8.

The basic and technical idea of the present invention resides in maintaining the variation of the heat transfer quantity Ql from the element body to the support member such as the lead wire and terminal due to the variation of the temperature Thl of the lead wire and the temperature Tht of the terminal caused by the flow velocity to be small, which is the cause of the error due to the flow velocity which can not be compensated by the conventional intake air temperature compensation. In an embodiment of the present invention, the material having small temperature coefficient $\Delta\lambda$ of the thermal conductivity $\lambda$ is used. Preferably, the material having small temperature coefficient $\Delta\lambda$ of the thermal conductivity $\lambda$ may be used also to the terminal.

In more detail, the material of which $\Delta\lambda$ is between - 0.06 and 0.06 W/m · $K^2$ is used. Preferably, the material of which the temperature coefficient $\Delta\lambda$ is between - 0.03 and 0.03 W/m · $K^2$ is used. More preferably, the material of which the temperature coefficient $\Delta\lambda$ is between - 0.02 and 0.02 W/m · $K^2$ is used. Concretely, it is possible to use a stainless member as the terminal and titanium of which the temperature coefficient $\Delta\lambda$ equals to -0.0083 W/m · $K^2$ or tantalum of which the temperature coefficient $\Delta\lambda$ equals to +0.004 W/m · $K^2$. Further, it is also possible to use the binary alloy including the components of noble metals such as platinum or palladium.

By using the above material as the support member, the following value $\delta$

$$\delta = 1 - \sqrt{(Qto / Qt)(Rh / Rho)}$$

is within the range of - 0.003 to 0.003 at measured fluid temperatures between - 30 °C and 80 °C. Preferably, the value δ is within the range of - 0.0015 to 0.0015. More preferably, the value δ is within the range of - 0.001 to 0.001.

The effect obtained by using such configuration will be explained by using numerals with reference to Fig.4 to Fig.6. Fig.4 is a numerical value graph showing the comparison of characteristics of the flow velocity and the output in the thermal type flow meter of the present invention and the prior art. Fig.5 is a numerical value graph showing the comparison of characteristics of the intake air temperature and the extent of heating in the thermal type flow meter of Fig.1 and the prior art. Fig.6 is a numerical value graph showing the comparison of characteristics of the intake air temperature and the output in the thermal type flow meter of Fig.1 and the prior art.

As shown in Fig.4, also in the range of the flow velocity from 0.5 m/s to 50 m/s,

$$\delta = 1 - \sqrt{(Qto / Qt)(Rh / Rho)}$$

it is possible to suppress the value δ to the range of ± 0.002 against the increase of the intake air temperature of 55 °C to 60 °C. Where, the extent of heating provided by the electronic circuit 8 shown in Fig.6 has the variation more than ±0.2% / °C in the range of the intake air temperature of -30 °C to 80 °C with respect to the extent of heating Δ Te0 at the standard temperature Ta0 (25 °C), as shown by the dotted wire of Fig.5. In particular, as shown by the dotted wire of Fig.4, it is possible to suppress the value δ to the range of ± 0.0015 in the range of the intake air temperature of -30 °C to 80 °C and at a low flow in which small variation of the value δ provides a large error to the output.

The operation and effect obtained by using the thermal type flow meter constructed as above will be explained.

Firstly, the operation of the bridge circuit shown in Fig.8 will be explained. The whole heating quantity Qt of the heating resistor 1 is determined by the equation Qt = Rh x $Ih_2$, where Rh is an electrical resistor and Ih is a current passing through the electrical resistor. Therefore, Ih is represented as follows, by using an output voltage V2 of the bridge circuit.

$$Ih = \sqrt{(Qt / Rh)} = V_2 / R_1$$

An output of the thermal type flow meter is obtained by amplifying the V2. Therefore, assumed that a standard output is V20 and a current obtained at this time is Ih0, the output error can be represented by the following equation.

$$\delta_0 = (V_2 - V_{20}) / V_{20} = (Ih - Ih_0) / Ih_0 = Ih / Ih_0 - 1$$

The above equation 3 can be represented as follows, by using the heating quantity Qt and the electrical resistance Rh.

$$\delta_0 = \sqrt{(Qto / Qt)(Rh / Rho)} - 1$$

The value δ can be represented by the following equation, based on V2.

$$\delta = 1 - \sqrt{(Qto / Qt)(Rh / Rho)}$$

While, assumed that R1, R7 and R8 respectively have constant resistance and Rc is the value of electrical resistance of the temperature compensating resistor.

$$Rh = (R1 / R7) \times (Rc + R8)$$

Further, assumed that Rc0 is the value of electrical resistance of the temperature compensating resistor at 0 °C.

$$Rc = Rc0 \times (1 + \kappa Tce)$$

Where, κ is the coefficient of temperature of the electrical resistor such as a platinum film or a platinum wire, material of the heating resistor. Tce is the temperature of the temperature compensating resistor, and is equal to or proportional to the intake air temperature Ta in the bridge circuit of Fig.8.

Rh is set to the value of the electrical resistance proportional to the intake air temperature by such a bridge circuit. When the temperature of the air flow to be measured is changed, for example, when the air temperature is increased from the standard temperature, the value of Rh/Rh0 becomes a value more than 1. At this time, the ratio Qt/Qt0 of the total heating quantity changes. If the value of Rh/Rh0 is not affected by the flow velocity, it is possible to bring δ 0 or δ into 0.

The total heating quantity Qt has the radintake air temperatureion quantity Qa to air in the element body and the heat transfer quantity Ql to the lead. Generally, the heat transfer quantity Q1 to lead of which the temperature level is varied according to the flow velocity and the radintake air temperatureion quantity Qa to air in the element body of which the temperature level is maintained approximately to be constant have different characteristics with respect to the variation due to the variation of the intake air temperature, respectively. Therefore, the variation of the ratio of the whole flow velocity at the standard temperature and the whole heating quantity Qt at an intake air temperature different from the standard temperature is not constant, as be Qt(80)/Qt(25) shown in Fig.13.

Therefore, by lessening the variation of the heat transfer quantity Ql due to the variation of the temperature of lead wire and the variation of the sum of them with respect to the flow velocity, it becomes possible to maintain Qt(80) /Qt(25) or Qt/Qt0 to be constant regardless of the flow velocity. As a result, as shown in Fig.4, it is possible to set δ or δ 0 approximately to 0 by using the bridge circuit shown in Fig.8.

In order to lessen the variation of the heat transfer quantity Q1 due to the variation of the temperature of the lead wire, it is effective to use a lead wire (ex. titanium wire or tantalum wire) formed by the material in which the variation of the thermal conductivity due to temperature is relatiely small by using such material, as shown by the dotted line of Fig.14, the difference δ' between the ratio Ql(80)/Qt(25) of the heat transfer quantity Ql(80) to lead and the whole heating quantity Qt(25) at a high flow velocity and the ratio Ql(80)/Qt(25) at a low flow velocity can be decreased even if the temperature The of the heating element is raisen more than that of the prior art. At this time, the rate of increase of the extent Δ Te of heating provided to the heating resistor 1 is set a value larger than the rate of flow velocity compared with the prior art in which platinum-iridium is used as lead material, as shown by the dotted line of Fig.5. As a result, as shown by the dotted line of Fig.6, it becomes possible to lessen the variation of the value δ in the wide range of temperature, for example, - 30 °C to 80 °C, as compared with the prior art.

The operation and effects of the present invention described above will be further explained in detail with reference to Figs.14 and 15, on the basis of the experimented result and the calculated result on the lead using titanium (Ti). Fig.14 is a numerical value graph showing the variation of difference between the ratio of the heating quantity at different intake air temperatures and the variation of the temperature of the heating element with respect to the variation of the flow velocity, in the thermal type flow meter according to the present invention and the prior art. Fig.15 is a numerical value graph showing the variation of the ratio of the heating quantity and the variation of the flow velocity at different intake air temperature in the thermal type flow meter according to the present invention.

In Fig.14, the difference δ' between the ratio of the heat transfer quantity Ql(80) to lead at 80 °C and the whole heating quantity Qt(25) at 25 °C standard is considered at the flow velocity 50 m/s, 5 m/s, and 0.5 m/s. Both the thermal type flow meter of the prior art shown by the solid line, which uses platinum-iridium as a lead wire, and the thermal type flow meter of the present invention shown by the dotted line, which uses titanium (Ti) as a lead wire become larger in value as the flow velocity is smaller. While in the thermal type flow meter of the present invention as compared with the prior art, the temperature The(80) of the heating resistor at 80 °C is high, the difference δ' is low. It is seen from the fact that the lead using Ti according to the present invention has smaller rate of increase of the heat transfer quantity Ql to the lead than that according to the prior art, with respect to the increase of the temperature of the lead wire due to the decrease of the flow velocity.

As shown in Fig.15, in the thermal type flow meter of the present invention, the ratio of the heat transfer quantity Qa(80) due to the compulsive convection from the element body to air and the whole heating quantity Qt(25) at the standard temperature 25°C is approximately symmetrical to the ratio of the heat transfer quantity Ql(80) and the whole heating quantity Qt(25), except the inclination is inversed to each other. The ratio Qt(80)/Qt(25) of the sum of them, the whole heating quantity does not have the dependence of the flow velocity due to the variation of the intake air temperature. In other words, by lessening the variation of the heat transfer quantity Ql to the lead due to the variation of the temperature of the lead, it becomes possible to decrease the error which depends upon the flow velocity when the intake air temperature of the thermal type flow meter is varied.

Fig.17 is a sectional view of a lead wire of the measurement element in the thermal type flow meter according to the present invention. The titanium and tantalum lead wire according to an embodiment of the present invention is formed by performing the baking of glass adhesive and coated glass at a low temperature less than 500 °C and less than that of the prior art. This is because these metals are oxidized at more than the above temperature. If it is necessary to perform the baking at a higher temperature for the actual purpose, it is possible to use such member of which the surface is coated in advance with the antioxidant film shown in Fig.17. The coefficient of temperature of the thermal conductivity of the material for coating must be similar to that of titanium or tantalium. it may use a binary alloy of which the main component is noble metal such as platinum or palladium as the material for forming the antioxidant film 40.

In some cases, the combination or alloy of noble metals may indicate new physical properties. Namely, the alloy of noble metals which the speed of oxidization is slow or the oxidization is not occurred may be developped in future. Therefore, it is possible to use the alloy of Pt-Pd or Pt-Rh as a lead, if developped.

The material used as the support member or the antioxidant film 40 in the thermal type flow meter of the present invention will be explained with reference to Fig.18. Fig.18 is a table showing the thermal conductivity and the coefficient of temperature of a lead wire or a terminal and antioxidant film used in the thermal type flow meter according to the present invention and the prior art.

The thermal conductivities $\lambda$ of titanium and tantalum shown as the example of the lead wire material are 21.9 W/m · K and 57.5 W/m · K, respectively, and the coefficients $\Delta\lambda$ of temperature of the thermal conductivities are -0.008 W/m · $K^2$ and +0.004 W/m · $K^2$ . Namely, both physical properties are different by more than two times in the value of the thermal conductivity. Further, the sign of the coefficient of temperature of the thermal conductivity is inversed to each other. Therefore, the inclination of the coefficient of temperature is inversed with respect to the variation of temperature. However, the effect that the variation of the value $\delta$ is decreased is the same.

By using the material of which the coefficient $\Delta\lambda$ of temperature of the thermal conductivity has a negative value as a lead wire, it is possible to produce a positive error even when the temperature of air is low (-30°C) and the flow quantity is low. The fuel is over-supplied due to the error. In a certain type of engine, there is an advantage, for example, in that the starting characteristic of an engine may be improved at a low temperature. On the other hand, because the starting characteristic of the engine is originally better at a high temperature, it is possible to lean the fuel and thus improve the fuel consumption or eliminate the harmful components of an exhaust gas.

As shown in Fig.18, it is desirable to use ziruconium (Zr), martensitic stainless steel and 9% Cr-Mo steel, except Ti, Ta, as the lead material. The austenitic stainless steel indicating $\Delta\lambda$ =+0 .01 W/m·$K^2$ or another material indicating $\Delta\lambda$ =+0.015 W/m . $K^2$ may be useful as the lead material.

It is, further, possible to use the above-mentioned member of which the surface is coated with the antioxidant film as the suppor member. A noble metal in the platinum system and an alloy of which the main component is platinum are suitable for the antioxidant film. Further, the palladium and the alloy of which the main component is palladium are also suitable, because the coefficient $\Delta\lambda$ of temperature of the thermal conductivity are small. Furthermore, by using such a member, it become possible to decrease the production cost.

As an example of such an alloy, there is a ternally alloy which consists of Pd(70)-Ir(15)-Pt(15) shown in Fig. 18. The coefficient $\Delta\lambda$ of temperature of the thermal conductivity is +0.0288 W/m · $K^2$, which is less than half, as compared with the alloy of which the main component is platinum, ex.PtIr(10). By using this alloy, it becomes possible to join the lead to the heating resistor by adhesive, and to prevent the deterioration of the characteristic on the coefficient $\Delta \lambda$ of temperature of the thermal conductivity of the core of a lead occurred by coating the surface of the lead with the antioxidant film.

The above-mentioned material is also useful for a terminal member.

Further, the lead wire formed by the material of which the coefficient $\Delta\lambda$ of temperature of the thermal conductivity is small is also applicable to a lead wire for supporting the temperature compensating resistor 5. By using such configuration, it becomes possible to decrease the variation of the thermal quantity shifted to the temperature compensating resistor when the temperature of the body is varied. As a result, it becomes possible to decrease the error of a so-called wall temperature. It is therefore possible further to improve the accuracy of the temperature compensation, and thus decrease the error of the output of the thermal type flow meter.

According to the configuration of the present invention, it is possible to decrease not only the error concerning the intake air temperature, but also the error concerning the variation of the temperature of the thermal type flow meter body.

## Claims

1. A thermal type flow meter comprising a first electric resistor (1) adapted to be provided within fluid to be measured, for detecting a flow quantity, and a second electric resistor (5) adapted to be provided within the fluid whose resistance value depends on a measured fluid temperature, whereby the temperature compensation corresponding to variation of the measured fluid temperature is made by heating said first electric resistor (1) in accordance with the measured fluid temperature detected by said second electric resistor (5) **characterized in that** the following value

$$\delta = 1 - \sqrt{(Qt0/Qt)\,(Rh/Rh0)}$$

determined by the total heat value Qto and the value Rho of electric resistance of said first electric resistor (1) at a predetermined temperature or reference temperature and the total heat value Qt and the value Rh of electric resistance of said first electric resistor (1) at the measured fluid temperature is within the range of - 0.003 to 0.003 at measured fluid temperatures between - 30 °C and 80 °C, wherein a support member extends from a member (4) containing an electric conductor connected to an electric circuit (8),
said support member includes a lead (2a, 2b) and a terminal (3a, 3b), the lead is formed by material of which the temperature coefficient $\Delta\lambda$ of thermal conductivity is between - 0.06 and 0.06 W/m · $K^2$.

2. A thermal type flow meter according to claim 1, wherein said support member is formed by alloy including the component of platinum or palladium.

3. A thermal type flow meter according to claim 1 or claim 2, wherein said support member is formed by titanium, tantalum, or zirconium or alloy including one of them, or by stainless steel of Cr-Mo steel.

4. A thermal type flow meter according to one of claims 1 to 3, wherein at least one portion of the surface of said support member is coated with an anti-oxidation film.

5. A thermal type flow meter according to claim 4, wherein at least one portion of the surface of said support member is coated with platinum, platinum alloy, palladium or palladium alloy.

6. A thermal type flow meter according to claim 1, wherein said value of $\delta$ indicates a negative inclination with respect to the variation of the measured fluid temperature.

7. A thermal type flow meter according to claim 1 or 2, wherein a lead of electronic circuits of the thermal type flow meter is formed by material of which the temperature coefficient $\Delta\lambda$ of thermal conductivity is between - 0.06 and 0.06 W/m . $K^2$.

8. A thermal type flow meter according to claim 1 or 2, wherein a lead of electronic circuits of the thermal type flow meter is formed by alloy including the component of platinum or palladium.

## Patentansprüche

1. Durchflussmesser des thermischen Typs, der ein erstes elektrisches Widerstandselement (1), das so beschaffen ist, dass es in einem zu messendem Fluid vorgesehen ist, um eine Durchflussmenge zu erfassen, und ein zweites elektrisches Widerstandselement (5), das so beschaffen ist, dass es in dem Fluid, dessen Widerstandswert von einer gemessenen Fluidtemperatur abhängt, vorgesehen ist, umfasst, wobei die Temperaturkompensation, die einer Änderung der gemessenen Fluidtemperatur entspricht, durch Heizen des ersten elektrischen Widerstandselements (1) in Übereinstimmung mit der durch das zweite elektrische Widerstandselement (5) erfassten gemessenen Fluidtemperatur erfolgt, **dadurch gekennzeichnet, dass** der folgende Wert

$$\delta = 1 - \sqrt{\left(\frac{Qto}{Qt}\right)\left(\frac{Rh}{Rho}\right)},$$

der durch den Gesamtwärmewert *Qto* und den Wert *Rho* des elektrischen Widerstands des ersten elektrischen Widerstandselements (1) bei einer vorgegebenen Temperatur oder Referenztemperatur und durch den Gesamtwärmewert *Qt* und den Wert *Rh* des elektrischen Widerstands des ersten elektrischen Widerstandselements (1) bei der gemessenen Fluidtemperatur bestimmt ist, im Bereich von -0,003 bis 0,003 bei gemessenen Fluidtemperaturen im Bereich von -30 °C bis 80 °C liegt, wobei sich ein Unterstützungsorgan von einem Organ (4) erstreckt, das einen elektrischen Leiter enthält, der mit einer elektrischen Schaltung (8) verbunden ist,
wobei das Unterstützungsorgan eine Leitung (2a, 2b) und einen Anschluss (3a, 3b) umfasst, wobei die Leitung aus einem Material gebildet ist, dessen Temperaturkoeffizient $\Delta\lambda$ der Wärmeleitfähigkeit im Bereich von -0,06 bis 0,06 W/m . $K^2$ liegt.

2. Durchflussmesser des thermischen Typs nach Anspruch 1, bei dem das Unterstützungsorgan aus einer Legierung gebildet ist, die eine Platin- oder Palladium-Komponente enthält.

3. Durchflussmesser des thermischen Typs nach Anspruch 1 oder Anspruch 2, bei dem das Unterstützungsorgan aus Titan, Tantal oder Zirkon oder aus einer Legierung, die eines von ihnen enthält, oder aus rostfreiem Stahl von Cr-Mo-Stahl gebildet ist.

4. Durchflussmesser des thermischen Typs nach einem der Ansprüche 1 bis 3, bei dem wenigstens ein Abschnitt der Oberfläche des Unterstützungselements mit einem Antioxidationsfilm beschichtet ist.

5. Durchflussmesser des thermischen Typs nach Anspruch 4, bei dem wenigstens ein Abschnitt der Oberfläche des Unterstützungsorgans mit Platin, einer Platinlegierung, Palladium oder einer Palladiumlegierung beschichtet ist.

6. Durchflussmesser des thermischen Typs nach Anspruch 1, bei dem der Wert $\delta$ eine negative Steigung in Bezug auf die Veränderung der gemessenen Fluidtemperatur angibt.

7. Durchflussmesser des thermischen Typs nach Anspruch 1 oder 2, bei dem eine Leitung von elektronischen Schaltungen des Durchflussmessers des thermischen Typs aus einem Material gebildet ist, dessen Temperaturkoeffizient $\Delta\lambda$ der Wärmeleitfähigkeit im Bereich von -0,06 bis 0,06 W/m · $K^2$ liegt.

8. Durchflussmesser des thermischen Typs nach Anspruch 1 oder 2, bei dem eine Leitung von elektronischen Schaltungen des Durchflussmessers des thermischen Typs durch eine Legierung gebildet ist, die eine Platin- oder Palladium-Komponente enthält.

## Revendications

1. Débitmètre du type thermique comprenant une première résistance électrique (1) agencée de manière à pouvoir être placée à l'intérieur du flux de fluide à mesurer, destinée à détecter un débit et une deuxième résistance électrique (5) agencée de manière à pouvoir être placée à l'intérieur du flux de fluide, dont la résistance est fonction de la température de la veine de fluide mesurée, la compensation de température correspondant à la variation de la température de la veine de fluide mesurée étant en l'occurrence réalisée en chauffant ladite première résistance électrique (1) en fonction de la température de la veine de fluide mesurée détectée par ladite deuxième résistance électrique (5), **caractérisé en ce que** la valeur suivante

$$\delta = 1 - \sqrt{(Qt0/Qt)\,(Rh/Rh0)}$$

déterminée par l'enthalpie totale Qto et la valeur Rho de résistance électrique de la première résistance électrique (1) à une température prédéterminée ou une température de référence et l'enthalpie totale Qt et la valeur Rh de résistance électrique de la première résistance électrique (1) à la température de la veine de fluide mesurée se situe dans une fourchette comprise entre - 0.003 et 0.003 à des températures de fluide mesurées se situant entre -30°C et 80°C, dans lequel un élément formant support s'étend depuis un élément (4) renfermant un conducteur électrique raccordé à un circuit électrique (8),
ledit élément formant support comprenant un conducteur (2a, 2b) et un contact d'extrémité (3a, 3b), le conducteur est réalisé dans une matière dont le coefficient de température $\Delta\lambda$ de conductivité thermique se situe entre -0.06 et 0.06 W/m . $K^2$.

**2.** Débitmètre du type thermique selon la revendication 1, dans lequel ledit élément formant support est réalisé dans un alliage renfermant du platine ou du palladium.

**3.** Débitmètre du type thermique selon la revendication 1 ou la revendication 2, dans lequel ledit élément formant support est réalisé en titane, en tantale ou en zirconium ou dans un alliage contenant un quelconque de ces éléments, ou en acier inoxydable ou en acier au Cr-Mo.

**4.** Débitmètre du type thermique selon l'une des revendications 1 à 3, dans lequel au moins une partie de la surface dudit élément formant support est revêtue d'une pellicule de matière anti-oxydante.

**5.** Débitmètre du type thermique selon la revendication 4, dans lequel au moins une partie de la surface dudit élément formant support est munie d'un revêtement de platine, d'alliage de platine, de palladium ou d'alliage de palladium.

**6.** Débitmètre du type thermique selon la revendication 1, dans lequel ladite valeur $\delta$ désigne une inclinaison négative par rapport à la variation de la température de la veine de fluide mesurée.

**7.** Débitmètre du type thermique selon les revendications 1 ou 2, dans lequel le conducteur des circuits électroniques du débitmètre du type thermique est réalisé dans une matière dont le coefficient de température $\Delta\lambda$ de conductivité thermique se situe entre -0.06 et 0.06 W/m . $K^2$.

**8.** Débitmètre du type thermique selon les revendications 1 ou 2, dans lequel le conducteur des circuits électroniques du débitmètre du type thermique est réalisé dans un alliage comprenant du platine ou du palladium.

FIG. 1

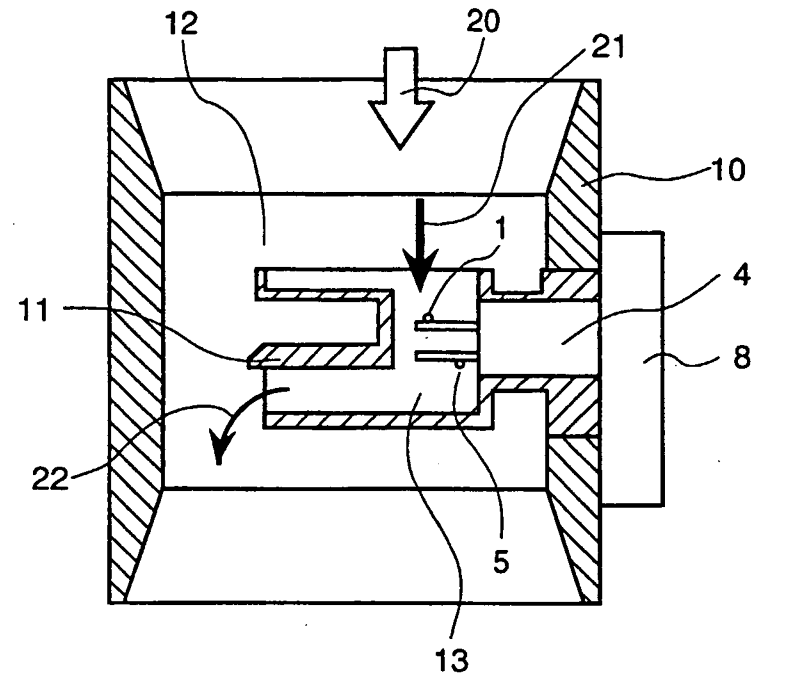


FIG. 2

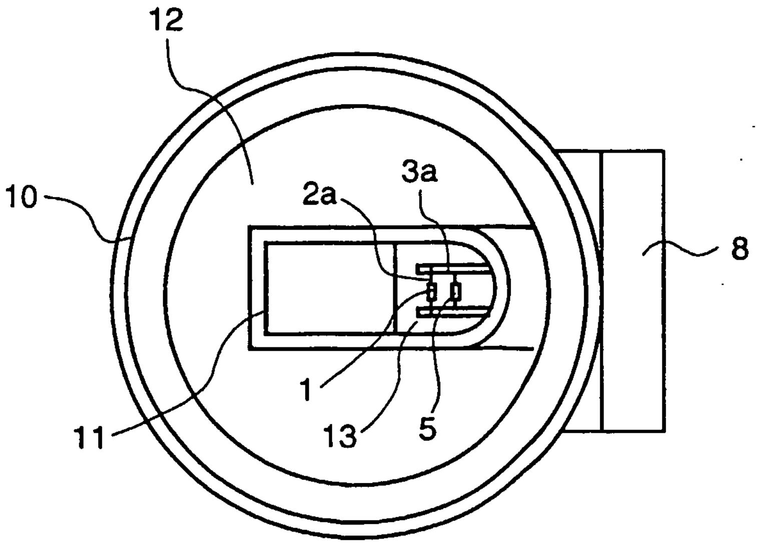

FIG.3

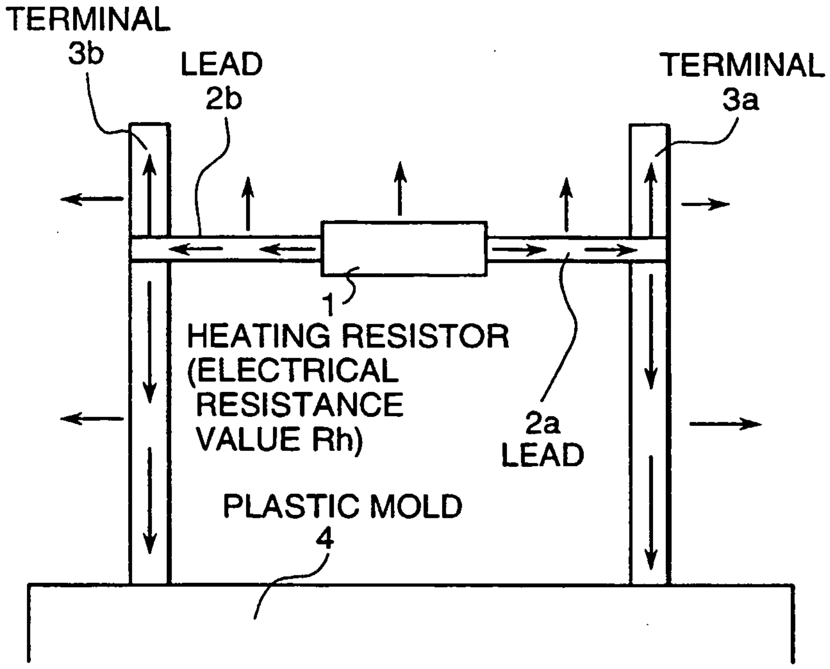
TERMINAL
3b
LEAD
2b
TERMINAL
3a
1
HEATING RESISTOR
(ELECTRICAL
RESISTANCE
VALUE Rh)
2a
LEAD
PLASTIC MOLD
4

FIG.4

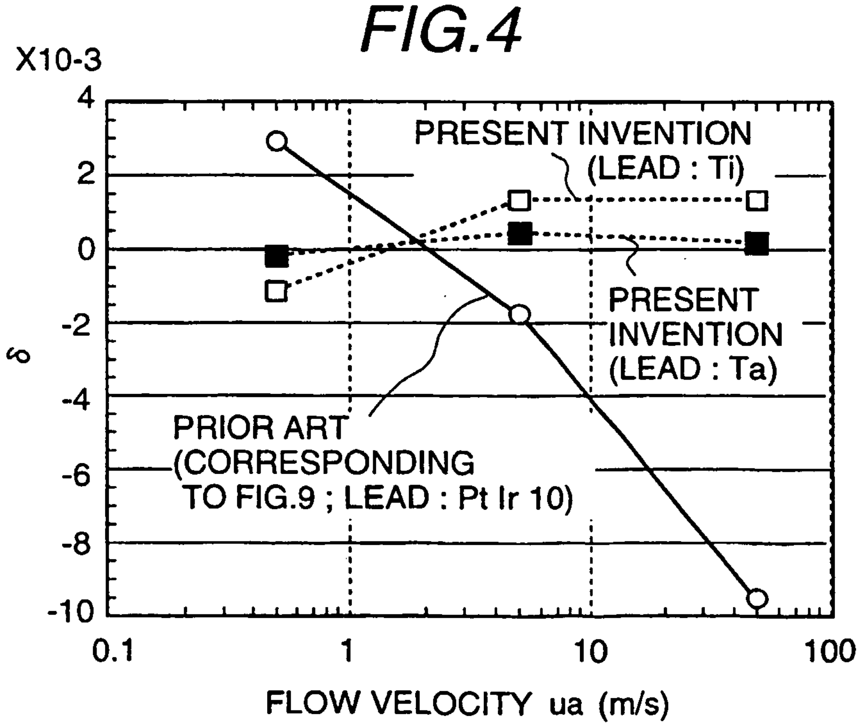
X10-3
4
2
0
-2
-4
-6
-8
-10
δ
PRESENT INVENTION
(LEAD : Ti)
PRESENT
INVENTION
(LEAD : Ta)
PRIOR ART
(CORRESPONDING
TO FIG.9 ; LEAD : Pt Ir 10)
0.1
1
10
100
FLOW VELOCITY ua (m/s)

FIG.5

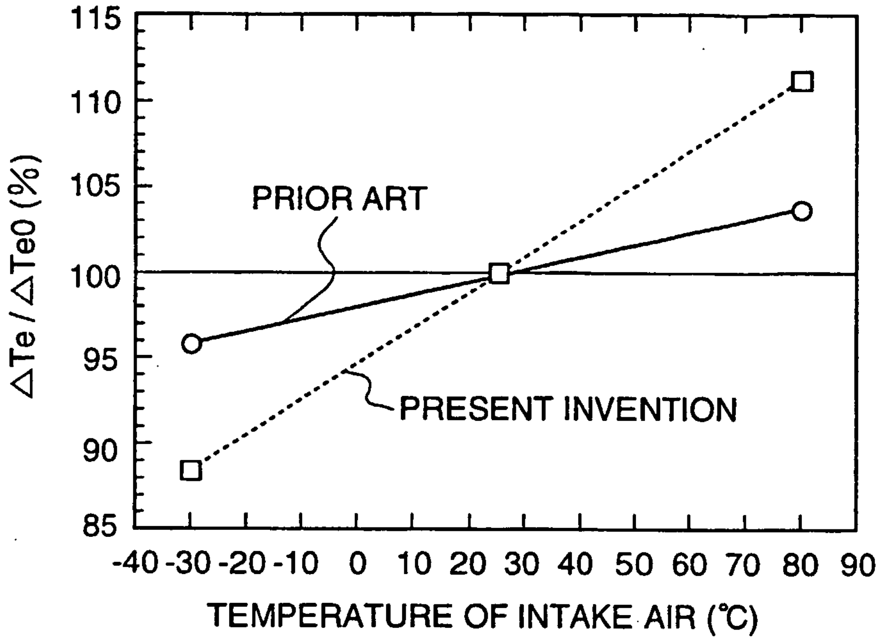
115
110
105
100
95
90
85
ΔTe / ΔTe0 (%)
PRIOR ART
PRESENT INVENTION
-40 -30 -20 -10 0 10 20 30 40 50 60 70 80 90
TEMPERATURE OF INTAKE AIR (℃)

FIG.6

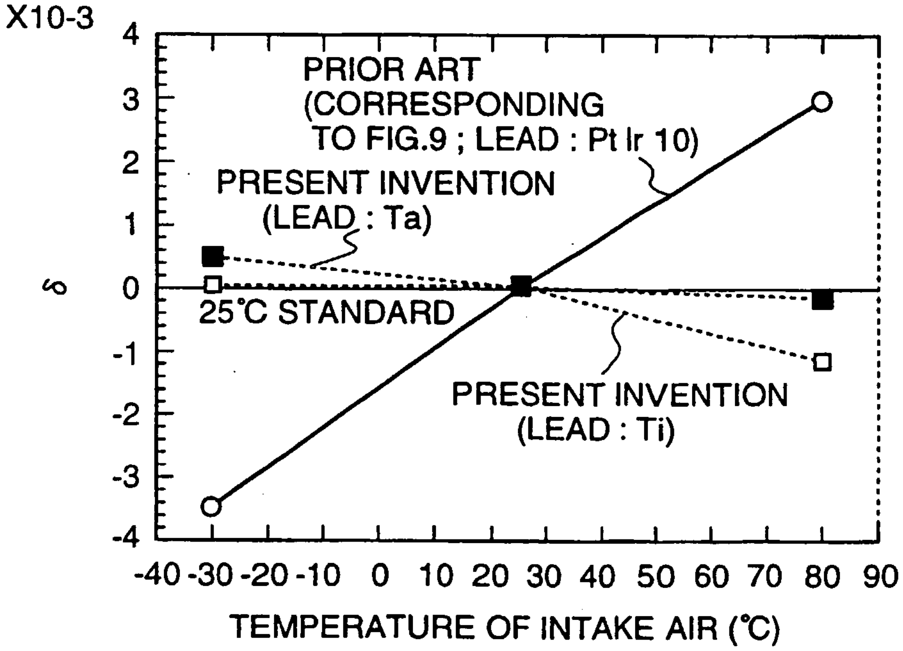
X10-3
4
3
2
1
0
-1
-2
-3
-4
δ
PRIOR ART
(CORRESPONDING
TO FIG.9 ; LEAD : Pt Ir 10)
PRESENT INVENTION
(LEAD : Ta)
25℃ STANDARD
PRESENT INVENTION
(LEAD : Ti)
-40 -30 -20 -10 0 10 20 30 40 50 60 70 80 90
TEMPERATURE OF INTAKE AIR (℃)

FIG.7

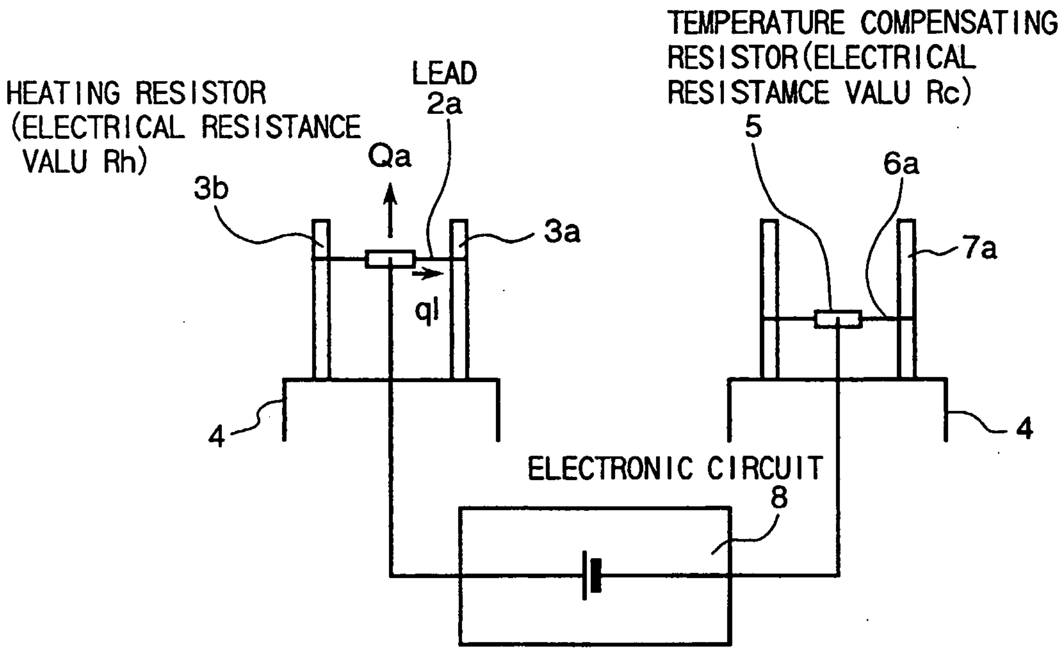
TEMPERATURE COMPENSATING RESISTOR(ELECTRICAL RESISTAMCE VALU Rc)
HEATING RESISTOR (ELECTRICAL RESISTANCE VALU Rh)
LEAD
2a
Qa
3b
3a
ql
5
6a
7a
4
4
ELECTRONIC CIRCUIT
8

FIG.8

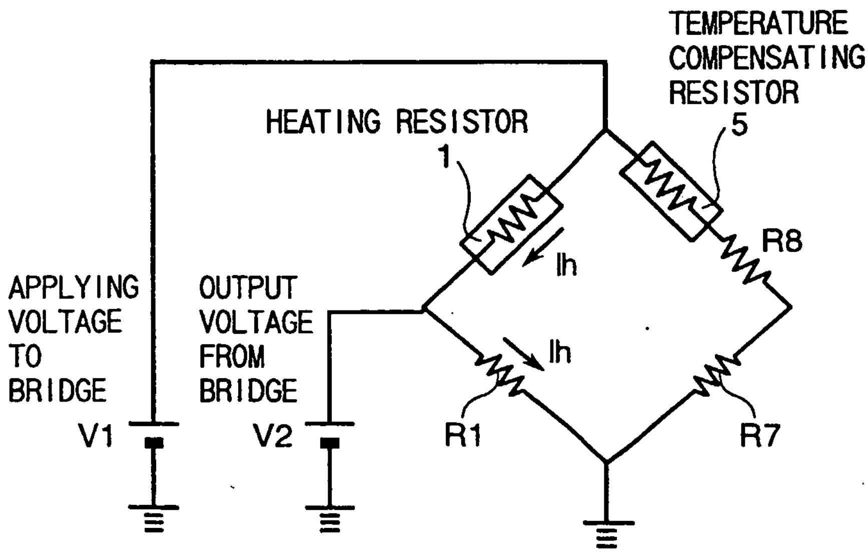
TEMPERATURE COMPENSATING RESISTOR
5
HEATING RESISTOR
1
Ih
R8
APPLYING VOLTAGE TO BRIDGE
OUTPUT VOLTAGE FROM BRIDGE
Ih
V1
V2
R1
R7

*FIG.9 (PRIOR ART)*

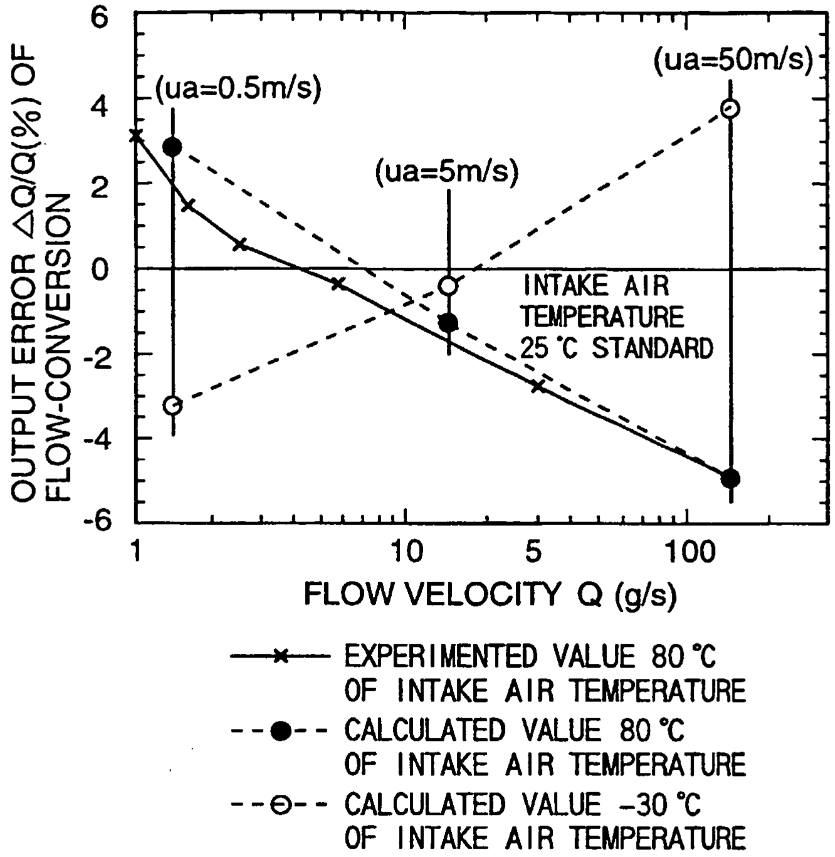


*FIG.10*

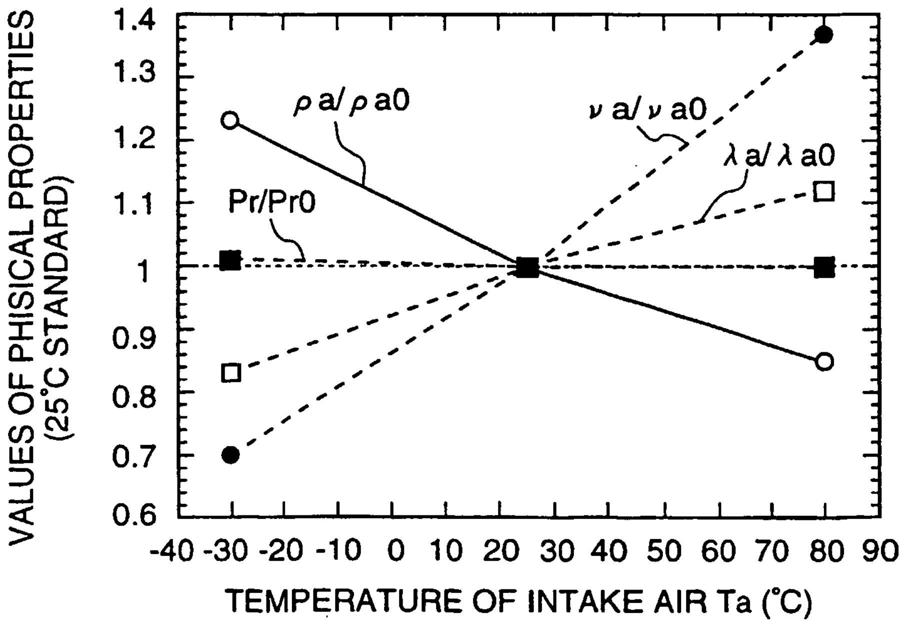

FIG.11

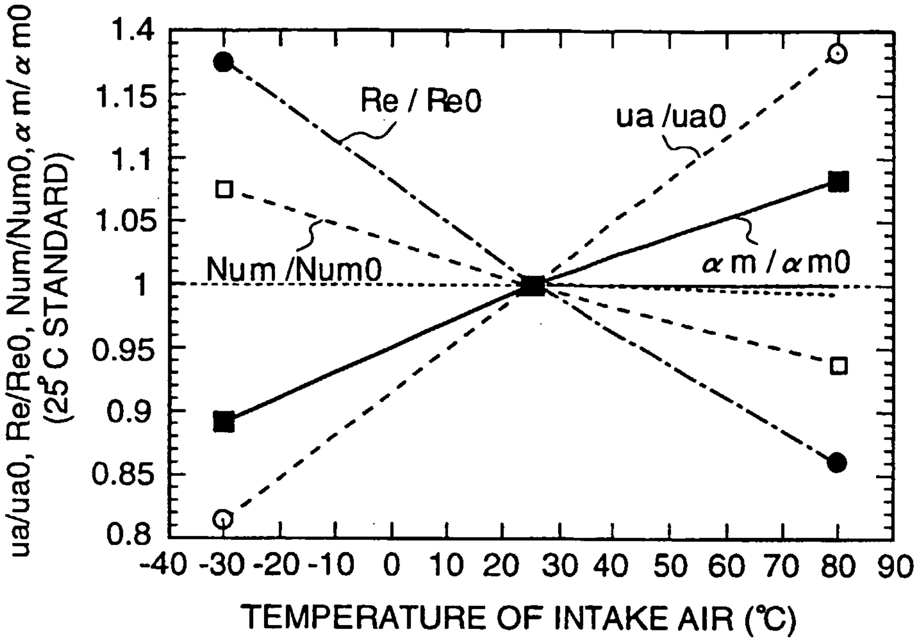
ua/ua0, Re/Re0, Num/Num0, αm/αm0
(25°C STANDARD)
1.4
1.15
1.1
1.05
1
0.95
0.9
0.85
0.8
Re / Re0
ua /ua0
Num /Num0
αm / αm0
-40 -30 -20 -10 0 10 20 30 40 50 60 70 80 90
TEMPERATURE OF INTAKE AIR (°C)

FIG.12

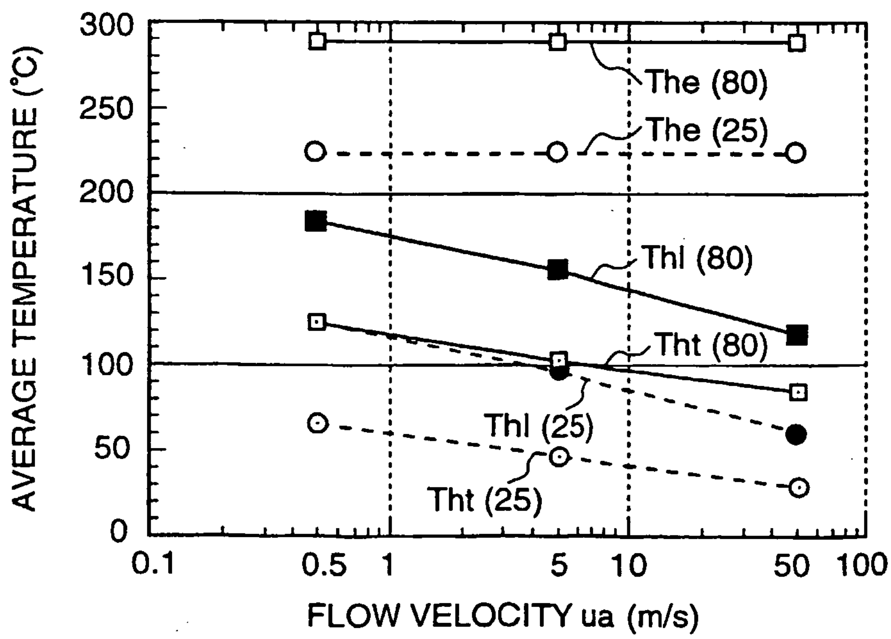
AVERAGE TEMPERATURE (°C)
300
250
200
150
100
50
0
The (80)
The (25)
Thl (80)
Tht (80)
Thl (25)
Tht (25)
0.1 0.5 1 5 10 50 100
FLOW VELOCITY ua (m/s)

# FIG.13

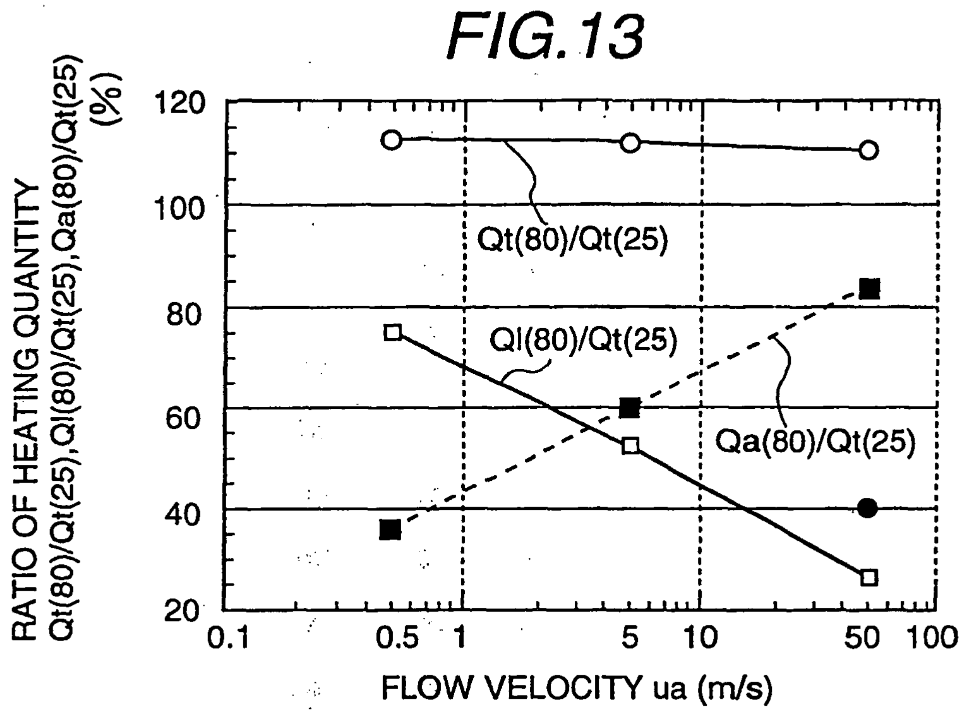


Qt:TOTAL HEAT VALUE,
Ql:HEAT TRANSMISSION QUANTITY TO LEAD,
Qa:RADIATION QUANTITY TO AIR (BOBBIN PART)
{(80):TEMPERATURE OF INTAKE AIR=80°C HOUR,
(25):TEMPERATURE OF INTAKE AIR=25°C HOUR }

# FIG.14

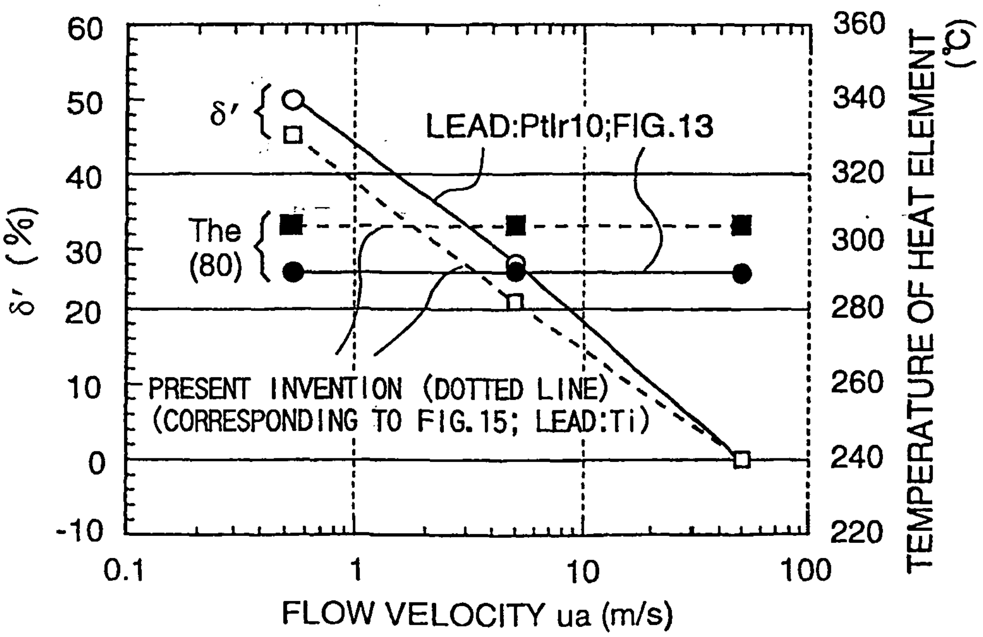

FIG.15

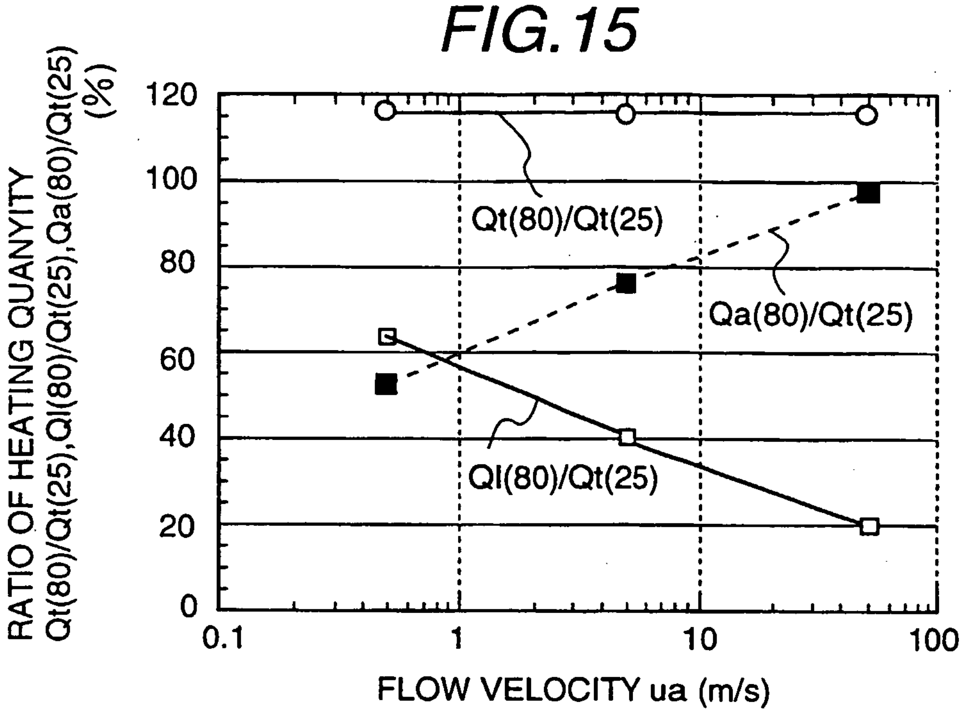


Qt:TOTAL HEAT VALUE,
Ql:HEAT TRANSMISSION QUANTITY TO LEAD,
Qa:RADIATION QUANTITY TO AIR (BOBIBIN PART)
{(80):TEMPERATURE OF INTAKE AIR=80°C HOUR,
(25):TEMPERATURE OF INTAKE AIR=25°C HOUR }

FIG.16

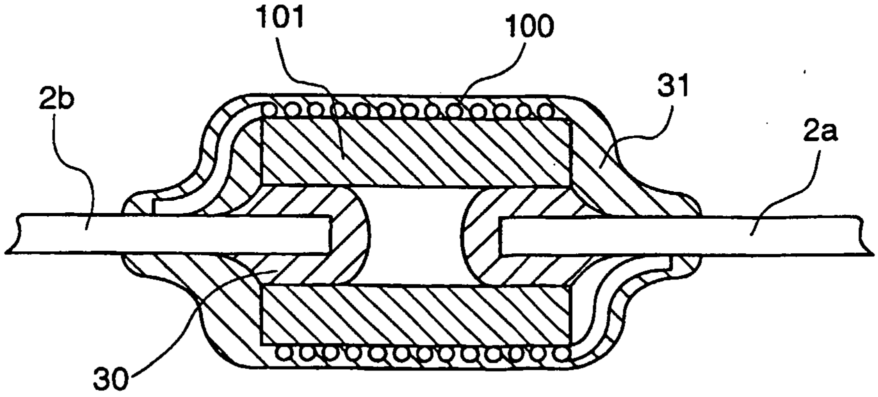

FIG.17

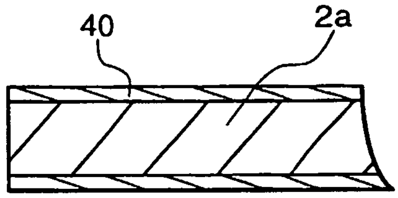


FIG.18

| NAME OF MATERIAL | TEPPERATURE (K) | THERMAL CONDUCTIVITY λ (W/m・K) | TEPPERATURE COEFFICIENT OF THERMAL CONDUCTIVITY △λ (W/(m・K2)) |
|---|---|---|---|
| PLATINUM-IRIDIUM(PtIr(10)) | 273<br>373 | 30.08<br>37.6 | 0.068 |
| TITANIUM(Ti) | 300<br>600 | 21.9<br>19.4 | -0.0083 |
| TANTALUM(Ta) | 300<br>1000 | 57.5<br>60.2 | 0.014 |
| GIRUCONIUM(Zr) | 300<br>1000 | 22.7<br>23.7 | 0.0014 |
| MARTENSITIC STANLESS STEEL (0.13C-12.95Cr-0,14Ni) | 300<br>500 | 26.9<br>27.6 | 0.0035 |
| AUSTENITIC STANLESS STEEL SUS304 (18Cr-8Ni) | 300<br>600 | 16.0<br>19.0 | 0.01 |
| 9%Cr-Mo STEEL (0.12C-9Cr-1Mo) | 300<br>500 | 26.1<br>26.9 | 0.004 |
| PALLADIUM (pd) ALLOY pd(70)-Ir(15)-Pt(15) | 273<br>373 | 17.2<br>19.5 | 0.0288 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 55050121 A
- JP 5312612 A
- JP 4285818 A
- JP 5052626 A
- JP 4028581 A
- JP 7229777 A
- JP 6267711 A